# EUROPEAN PATENT SPECIFICATION

(11) **EP 4 534 439 B1**
(45) Date of publication and mention of the grant of the patent: **08.04.2026**
(21) Application number: 24202694.6
(22) Date of filing: 25.09.2024
(51) Int. Cl.: B65D 63/08

(54) **BI-LEVEL METAL LOCKING CLEAT**
ZWEISTUFIGE METALLVERRIEGELUNGSPLATTE
CRAMPON DE VERROUILLAGE MÉTALLIQUE À DEUX NIVEAUX

(30) Priority: 04.10.2023 US 202318376670
(43) Date of publication of application: 09.04.2025
(73) Proprietor: Panduit Corp., Tinley Park, Illinois 60487 (US)
(72) Inventor: Rouleau, Rodney G., Tinley Park (US); Ramahi, Sahar, Tinley Park (US); Molenhouse, Nicholas M., Tinley Park (US)
(74) Representative: Roberts, Gwilym Vaughan

(56) References cited:
- KR-A- 20010 046 034
- US-A- 230 313
- US-B2- 8 635 745

## Description

### Field of the Invention

The present invention relates to a metal locking cleat, and more particularly to a bi-level metal locking cleat with improved strength.

### Background of the Invention

Metallic bundling devices incorporating locking balls and roller pins have been used for bundling bales of cotton or the like since the Nineteenth Century. None of the prior devices were positive locking, i.e., depending on the orientation of the locking head, gravity could hold the ball out of locking engagement with the strap resulting in release. U.S. Patent No. 4,399,592 addressed this problem by teaching the addition of a raised portion or protuberances for deflecting the threaded strap away from the floor as the threaded strap exits the locking head. This deflection ensures that the locking ball is in continuous engagement with the threaded strap regardless of the position of the ball or the orientation of the locking head.

U.S. Patent No. 8,635,745 discloses a metal ball locking tie with a bi-level head. FIGS. 1A and 1B illustrate the prior art metal ball locking tie with bi-level head 20. The metal locking tie with bi-level head has a high loop tensile strength compared to other metal locking ties. The metal ball locking tie with bi-level head, however, is difficult to manufacture. A progressive die is required to stamp the bi-level head which would require a number of stamping stations, a large die, and a large press bed. Additionally, threading multiple tie loops through the bi-level head is complicated and too difficult when the metal locking tie is wrapped around a small diameter cable bundle.

U.S. Patent No. 9,783,350 discloses a metal ball locking tie with an extended support clip. The extended support clip provides floor support to the head of the metal ball locking tie to withstand impulse forces.

Stainless steel strap cable cleats (MS 75 straps) have been used for securing a bundle of cables and for providing short circuit protection. The stainless steel strap cable cleats are stronger than metal ball locking ties for a number of reasons. The strap body is generally wider and thicker than metal ball locking ties. The stainless steel strap can be triple looped during installation instead of just doubled looped. Finally, the strap body withstands an impulse force, such as a short circuit event or a military application, compared to metal ball locking ties. Stainless steel strap cable cleats, however, are challenging to install. Threading the stainless steel strap is difficult especially for small diameter cable bundles. Additionally, tools are required for installation of the stainless steel strap cable cleats and closing the strap buckle is often difficult.

Thus, it would be desirable to provide an improved metal locking cleat for securing a bundle of cables that is easier to install and is capable of withstanding strong impulse forces or short circuit events.

KR 2001-0046034 A describes, according to its abstract, a reusable clasping member including a thin strip, a fixing section and a fixing bolt. The thin strip has an end, which is a fixed end forming a bolt insertion hole, and the other end, which is a coupling end forming a plurality of bolt insertion hole. The fixing section has an insertion hole for passing the thin strip, a lower portion, on which the fixed end of the thin strip is fixed, and, which has a fixing hole, and an upper portion having the fixing section which has a fixing bolt hole corresponding to the fixing hole of the lower portion. The fixing bolt is inserted into the bolt fixing hole of the fixing section to fix the thin strip.

US 230313 A, describes, "Bale Ties" holding a band securely, and which at the same time are so constructed that the band may be taken off without cutting or breaking the band.

### Summary of the Invention

The invention to which the present European patent relates is set out in the appended claims.

A metal locking cleat for securing cable bundles is disclosed. The metal locking cleat has a multi-level housing, a tie body, and a metal locking head. The multi-level housing includes a top, a bottom, sides, a front, a back, an upper level, and a lower level. The tie body is positioned in the lower level of the housing. The metal locking head is positioned in the upper level of the housing. To install the metal locking cleat, the tie body wraps around a cable bundle and through the lower level of the housing for multiple loops. Next, the tie body extends through the upper level of the housing and through the metal locking head to secure the metal locking cleat.

### Brief Description of the Drawings

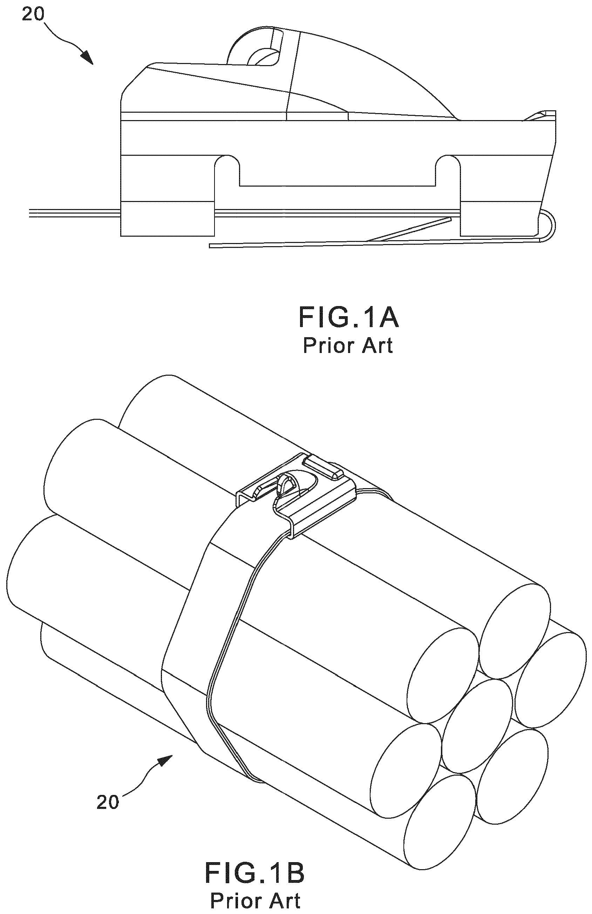

FIG. 1A is a side view of a prior art metal locking tie with a bi-level head.
FIG. 1B is a perspective view of the metal locking tie with a bi-level head of FIG. 1 installed around a cable bundle.
FIG. 2 is an exploded view of the bi-level metal locking cleat of the present invention.
FIG. 3 is a perspective view of the metal locking cleat housing of FIG. 2.
FIG. 4 is a partially exploded view of the bi-level metal locking cleat of FIG. 2 with a first end of the tie body installed in the housing.
FIG. 5 is a partially exploded view of the bi-level metal locking cleat of FIG. 4 with the metal locking head installed in the housing.
FIG. 6 is a perspective view of the assembled bi-level metal locking cleat of FIG. 2.
FIG. 7 is a perspective view of the bi-level metal locking cleat of FIG. 6 with a second end of the tie body fed through the housing and the metal locking head.
FIG. 8 is a perspective view of the bi-level metal locking cleat of FIG. 7 with the fastener tightened and the tie body deformed.
FIG. 9 is a perspective view of the bi-level metal locking cleat of FIG. 8 wrapped around a cable bundle.
FIG. 10 is a cross sectional view of the bi-level metal locking cleat of FIG. 8 taken along line 10-10.

### Detailed Description

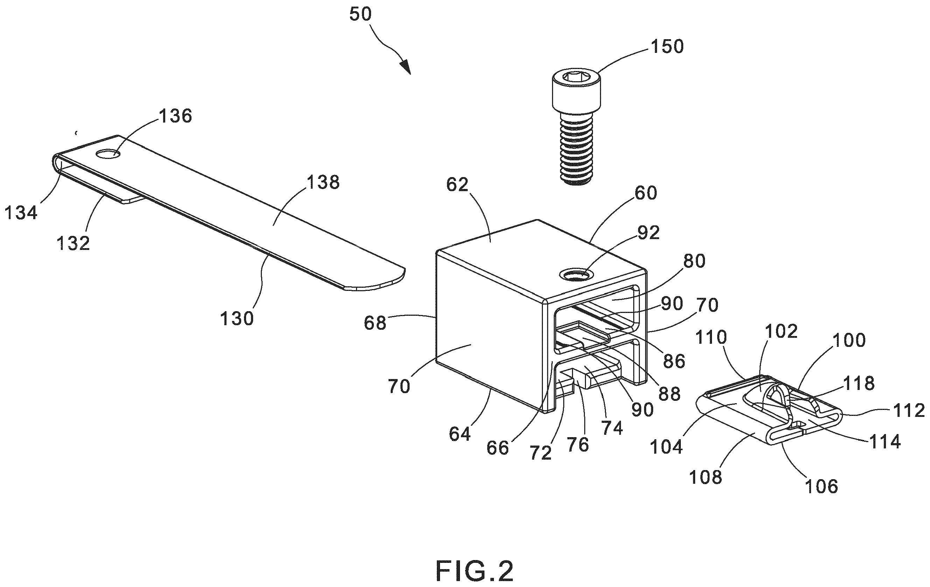

FIG. 2 is an exploded view of the bi-level metal locking cleat 50 of the present invention. The bi-level metal locking cleat 50 includes a stainless steel housing 60, a metal locking head 100, a tie body 130, and a fastener 150. The metal locking head 100 and tie body 130 form a standard metal locking tie as described in commonly owned U.S. Patent No. 6,647,596, herein incorporated by reference.

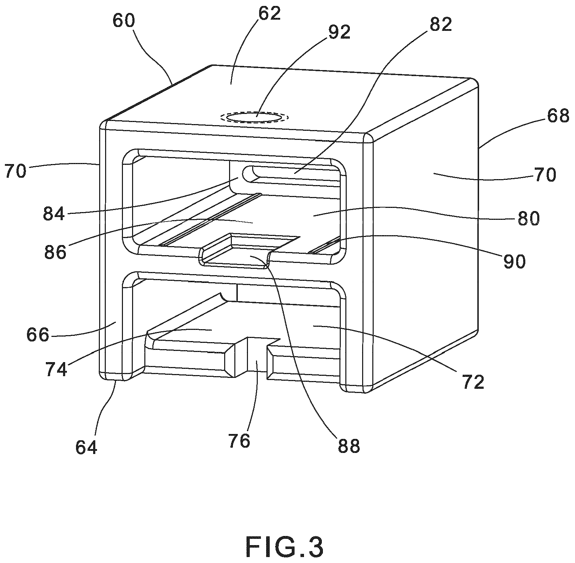

FIG. 3 illustrates a perspective view of the housing 60 of the bi-level metal locking cleat 50. The housing 60 includes a top wall 62, a bottom wall 64, an open front 66, a partially open back 68, and two sidewalls 70. The housing 60 is divided into a lower level 72 and an upper level 80.

The lower level 72 includes a short lower level floor 74 that is centered between the front 66 and the back 68 of the housing 60. The short lower level floor 74 has a body shear form cutout 76 for attachment of the tie body 130. The lower level floor 74 is shorter than the upper level 80 to maximize the number of loops of the tie body 130 by controlling the arc peak of the tie body 130 when it is installed in the lower level 72.

The sidewalls 70 of the housing 60 fully support the upper level 80. The back 68 of the upper level 80 is enclosed except for a pass thru slot 82 designed to receive the last loop of the tie body 130 that is then fed through the metal locking head 100. The remainder of the back 68 of the upper level 80 of the housing 60 forms a head retainment wall 84 to keep the metal locking head 100 in the housing 60 when the metal locking cleat 50 is under tension.

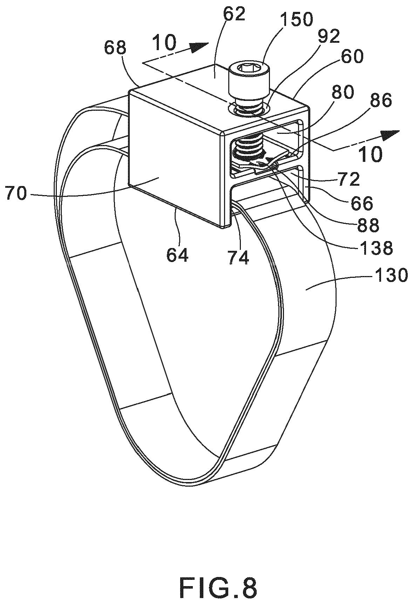

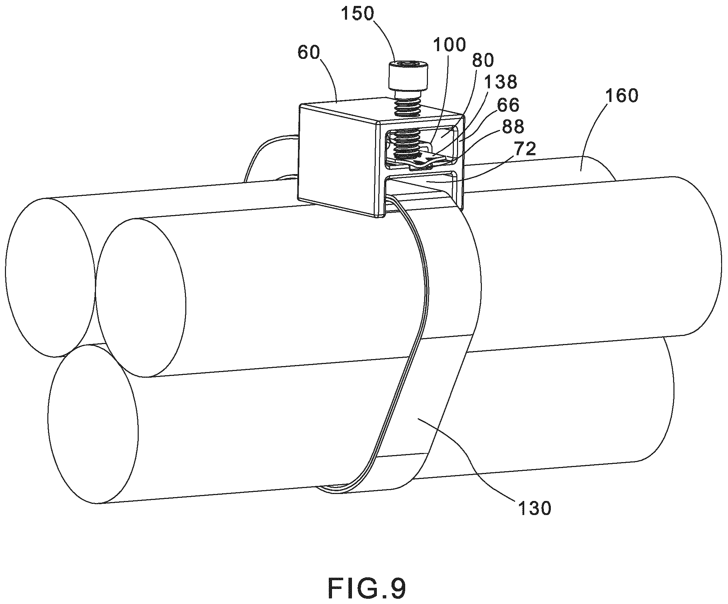

The upper level 80 includes an upper level floor 86 with a tie body lock recess 88 that receives the tie body 130 when the fastener 150 is tightened and deforms the tie body 130 (see FIGS. 8 and 9). The deformed tie body 130 increases the strength of the metal locking cleat 50 and improves resistance to slippage during impulse forces.

The upper level floor 86 also includes head retainment ribs 90. One head retainment rib 90 is positioned on each side of the tie body lock recess 88. The head retainment ribs 90 create an interference fit between the metal locking head 100 and the housing 60. The top wall 62 of the housing, or the ceiling of the upper level 80, has a threaded fastener hole 92. The threaded fastener hole 92 is positioned above the tie body lock recess 88.

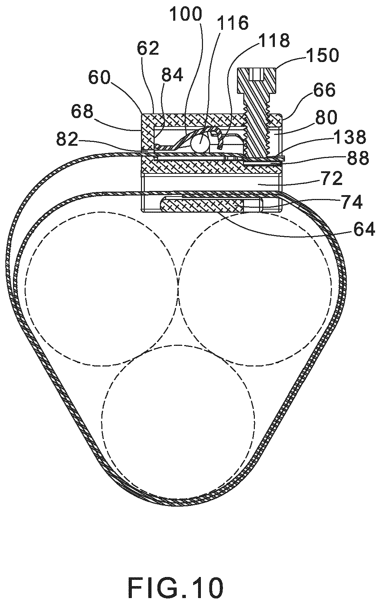

The metal locking head 100 has a roof 102, a ceiling 104, and a bottom wall 106. The bottom wall 106 and ceiling 104 are joined by a pair of sidewalls 108. The metal locking head 100 has a strap entry face 110, a strap exit face 112, and a strap receiving aperture 114 extending therebetween. The metal locking head 100 includes a roller means 116 in the form of a ball or sphere for retaining the tie body 130 within the locking head 100 (see FIG. 10). The ball 116 is captively held between the roof 102 and the bottom wall 106 by a finger 118 extending from the roof 102 towards the bottom wall 106 adjacent to the strap exit face 112. The tie body 130 includes a first end 132, a hooked portion 134, an aperture 136 and a second end 138. The tie body 130 could also include a locking tab (not illustrated), if desired.

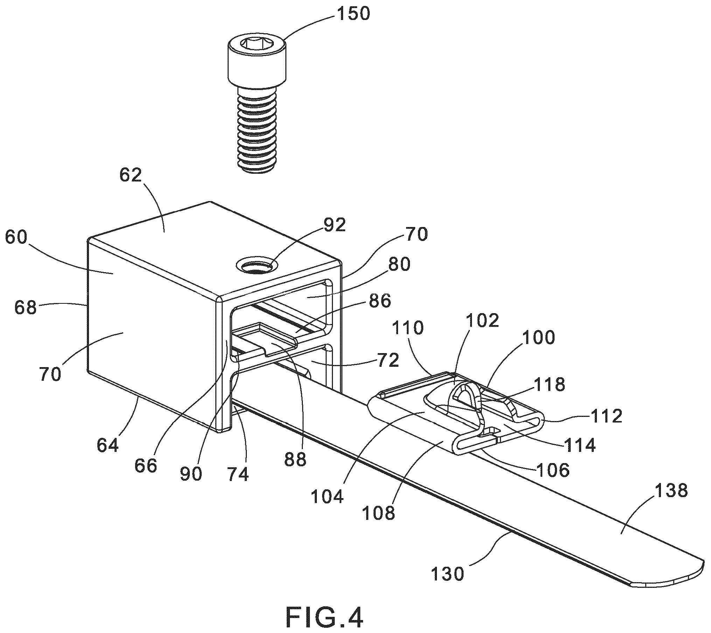

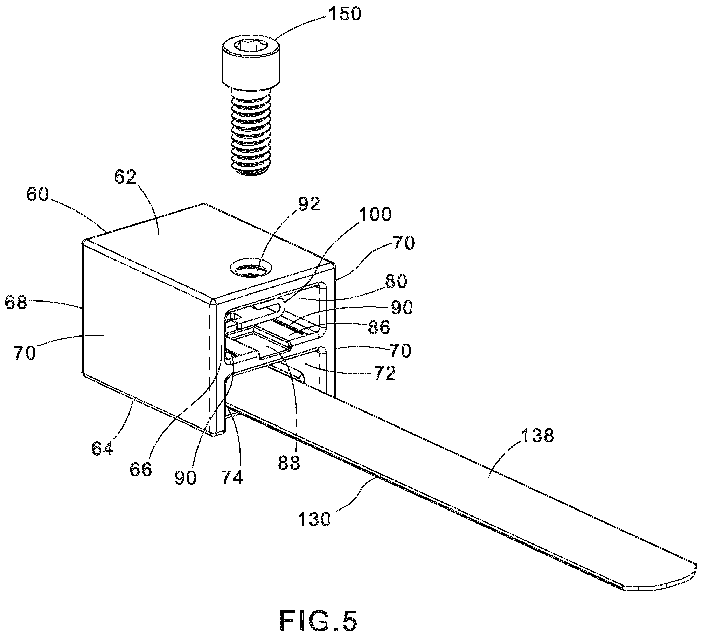

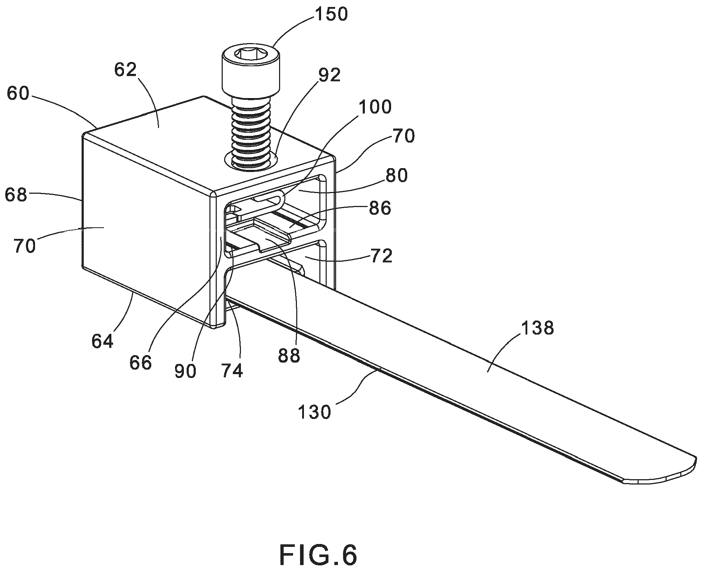

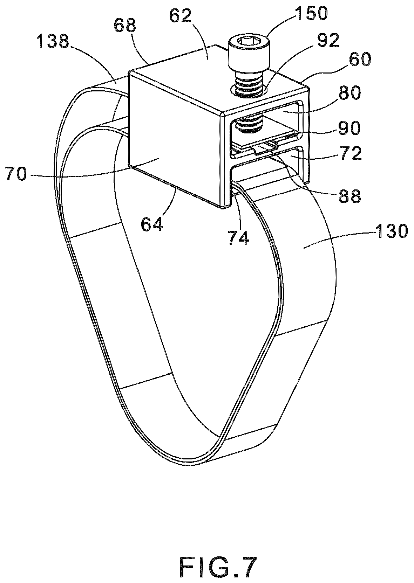

FIGS. 4-10 illustrate the assembly of the bi-level metal locking cleat 50 of the present invention. The bi-level metal locking cleat 50 requires a small amount of assembly at the factory that includes positioning the metal locking head 100 into the upper level 80 of the housing 60, positioning fastener 150 into the threaded fastener hole 92, and positioning the tie body 130 in the lower level 72 of the housing 60. The tie body 130 could also be field installed in the housing, if desired. As illustrated in FIG. 4, the tie body 130 is positioned in the lower level 72 of the housing 60. The tie body 130 is wrapped around the short lower level floor 74 and the bottom wall 64 of the housing 60 (see FIG. 10). The metal locking head 100 is positioned within the upper level 80 of the housing 60 (see FIG. 5). The metal locking head 100 is retained in the housing 60 by an interference fit created by the sidewalls 70 and the head retainment ribs 90. The final step for initial assembly is that the fastener 150 is positioned within the threaded fastener hole 92 in the top wall 62 of the housing 60 (see FIG. 6).

The tie body 130 is then looped around a cable bundle 160 (see FIG. 9) and reinserted in and through the lower level 72 of the housing 60. The desired number of tie loops needs to be determined to achieve the required strength of the metal locking cleat 50. Once the desired number of tie loops of the tie body 130 has been achieved, the last tie loop of the tie body 130 is inserted and pushed through the pass thru slot 82 in the upper level 80 of the housing 60 and through the metal locking head 100. The last tie loop of the tie body 130 should be pushed through the metal locking head 100 as far as possible before attaching a flush cut tensioning tool to the second end 138 of the tie body 130. The tie body 130 is then tensioned by the tool to the desired tension level and cut flush to the housing 60. The housing remains perpendicular to the cable bundle throughout assembly. Once the tie body 130 has been tensioned, the fastener 150 may be tightened to the desired torque. As the fastener 150 is tightened, the tie body 130 deforms into the body lock recess 88 in the upper level floor 86 of housing 60 (see FIGS. 8 and 9).

The bi-level metal locking cleat of the present invention provides the required strength to withstand impulse forces. The bi-level metal locking cleat is easy to assemble and allows multiple loops of the tie body to achieve the strength requirements. The bi-level metal locking cleat can also be easily installed in confined spaces as the tie body of the metal locking cleat is tensioned and cutoff without the need of rotating any tool.

Furthermore, while the particular preferred embodiments of the present invention have been shown and described, it will be obvious to those skilled in the art that changes and modifications may be made without departing from the teaching of the invention. The matter set forth in the foregoing description and accompanying drawings is offered by way of illustration only and not as limitation. The actual scope of the invention is intended to be defined in the following claims.

## Claims

1. A metal locking cleat (50) for securing cable bundles, the metal locking cleat comprising:
a housing (60) having a top (62), a bottom (64), sides (70), a front (66), a back (68), an upper level (80), and a lower level (72);
a tie body (130) positioned in the lower level of the housing; and
a metal locking head (100) positioned in the upper level of the housing;
whereby the tie body wraps around a cable bundle (160) and through the lower level of the housing, through the upper level of the housing, and through the metal locking head to secure the metal locking cleat.

2. The metal locking cleat of claim 1, wherein the lower level of the housing has a lower level floor (74) centered between the front of the housing and the back of the housing,
optionally wherein the lower level floor is shorter than the upper level of the housing.

3. The metal locking cleat of any preceding claim, wherein the housing further comprises a fastener hole (92) in the top of the housing for receiving a fastener (150) to engage the tie body fed through the metal locking head.

4. The metal locking cleat of any preceding claim, wherein the upper level of the housing has an upper level floor (86) with a tie body lock recess (88),
optionally wherein the housing has a threaded fastener hole (92) in the top of the housing for receiving a fastener (150), whereby the tightened fastener deforms the tie body into the tie body lock recess,
further optionally wherein the deformed tie body increases the strength of the metal locking cleat and improves resistance to slippage.

5. The metal locking cleat of any preceding claim, wherein the back of the housing has a pass thru slot (82) into the upper level for receiving the tie body.

6. The metal locking cleat of any preceding claim, wherein the upper level of the housing has a head retainment wall (84) along the back of the housing for maintaining the metal locking head in the housing.

7. The metal locking cleat of any preceding claim, wherein the upper level of the housing has head retainment ribs (90) positioned on a floor (86) of the upper level, the head retainment ribs provide an interference fit for the metal locking head positioned in the housing.

8. A metal locking cleat assembly comprising:
the metal locking cleat of any of claims 1 to 7; and
a fastener (150) installed through the top of the multi-level housing;
wherein the tie body has a first end (132) and a second end (138), the first end of the tie body wrapped around the lower level of the multi-level housing.

9. The metal locking cleat assembly of claim 8, wherein the fastener engages the second end of the tie body fed through the metal locking head,
optionally wherein the upper level of the housing has an upper level floor (86) with a tie body lock recess (88), whereby tightening the fastener deforms the second end of the tie body into the tie body lock recess,
further optionally wherein the deformed second end of the tie body increases the strength of the metal locking cleat assembly and improves resistance to slippage.

## Patentansprüche

1. Metallverriegelungsschelle (50) zum Befestigen von Kabelsätzen, wobei die Metallverriegelungsschelle Folgendes umfasst:
ein Gehäuse (60) mit einer Oberseite (62), einer Unterseite (64), Seiten (70), einer Vorderseite (66), einer Rückseite (68), einer oberen Ebene (80) und einer unteren Ebene (72);
einen in der unteren Ebene des Gehäuses positionierten Binderkörper (130); und
einen in der oberen Ebene des Gehäuses positionierten Metallverriegelungskopf (100);
wodurch sich der Binderkörper um einen Kabelsatz (160) und durch die untere Ebene des Gehäuses, durch die obere Ebene des Gehäuses und durch den Metallverriegelungskopf wickelt, um die Metallverriegelungsschelle zu befestigen.

2. Metallverriegelungsschelle nach Anspruch 1, wobei die untere Ebene des Gehäuses einen Boden (74) der unteren Ebene aufweist, der zwischen der Vorderseite des Gehäuses und der Rückseite des Gehäuses zentriert ist, wobei der Boden der unteren Ebene optional kürzer als die obere Ebene des Gehäuses ist.

3. Metallverriegelungsschelle nach einem der vorhergehenden Ansprüche, wobei das Gehäuse ferner eine Befestigungselementbohrung (92) in der Oberseite des Gehäuses zum Aufnehmen eines Befestigungselements (150) zum Eingreifen in den durch den Metallverriegelungskopf geführten Binderkörper umfasst.

4. Metallverriegelungsschelle nach einem der vorhergehenden Ansprüche, wobei die obere Ebene des Gehäuses einen Boden (86) der oberen Ebene mit einer Binderkörperverriegelungsaussparung (88) aufweist,
wobei das Gehäuse optional eine Gewindebefestigungselementbohrung (92) in der Oberseite des Gehäuses zum Aufnehmen eines Befestigungselements (150) aufweist, wodurch das festgezogene Befestigungselement den Binderkörper in die Binderkörperverriegelungsaussparung verformt,
wobei der verformte Binderkörper optional ferner die Festigkeit der Metallverriegelungsschelle erhöht und den Gleitwiderstand verbessert.

5. Metallverriegelungsschelle nach einem der vorhergehenden Ansprüche, wobei die Rückseite des Gehäuses einen Durchgangsschlitz (82) in die obere Ebene zum Aufnehmen des Binderkörpers aufweist.

6. Metallverriegelungsschelle nach einem der vorhergehenden Ansprüche, wobei die obere Ebene des Gehäuses eine Kopfstützwand (84) entlang der Rückseite des Gehäuses zum Halten des Metallverriegelungskopfes in dem Gehäuse aufweist.

7. Metallverriegelungsschelle nach einem der vorhergehenden Ansprüche, wobei die obere Ebene des Gehäuses auf einem Boden (86) der oberen Ebene positionierte Kopfstützrippen (90) aufweist, wobei die Kopfstützrippen eine Presspassung für den in dem Gehäuse positionierten Metallverriegelungskopf bereitstellen.

8. Metallverriegelungsschellenbaugruppe, die Folgendes umfasst:
die Metallverriegelungsschelle nach einem der Ansprüche 1 bis 7; und
ein durch die Oberseite des Mehrebenengehäuses installiertes Befestigungselement (150);
wobei der Binderkörper ein erstes Ende (132) und ein zweites Ende (138) aufweist, wobei das erste Ende des Binderkörpers um die untere Ebene des Mehrebenengehäuses gewickelt ist.

9. Metallverriegelungsschellenbaugruppe nach Anspruch 8, wobei das Befestigungselement in das zweite Ende des durch den Metallverriegelungskopf geführten Binderkörpers eingreift,
wobei die obere Ebene des Gehäuses optional einen Boden (86) der oberen Ebene mit einer Binderkörperverriegelungsaussparung (88) aufweist, wodurch beim Anziehen des Befestigungselements das zweite Ende des Binderkörpers in die Binderkörperverriegelungsaussparung verformt wird,
wobei das verformte zweite Ende des Binderkörpers optional ferner die Festigkeit der Metallverriegelungsschellenbaugruppe erhöht und den Gleitwiderstand verbessert.

## Revendications

1. Serre-câble métallique à verrouillage (50) pour fixer des faisceaux de câbles, le serre-câble métallique à verrouillage comprenant :
un boîtier (60) ayant un dessus (62), un dessous (64), des côtés (70), un avant (66), un arrière (68), un niveau supérieur (80), et un niveau inférieur (72) ;
un corps d'attache (130) positionné dans le niveau inférieur du boîtier ; et
une tête métallique de verrouillage (100) positionnée dans le niveau supérieur du boîtier ;
moyennant quoi le corps d'attache s'enroule autour d'un faisceau de câbles (160) et à travers le niveau inférieur du boîtier, à travers le niveau supérieur du boîtier, et à travers la tête métallique de verrouillage pour fixer le serre-câble métallique à verrouillage.

2. Serre-câble métallique à verrouillage de la revendication 1, dans lequel le niveau inférieur du boîtier a un fond de niveau inférieur (74) centré entre l'avant du boîtier et l'arrière du boîtier,
facultativement dans lequel le fond de niveau inférieur est plus court que le niveau supérieur du boîtier.

3. Serre-câble métallique à verrouillage d'une quelconque revendication précédente, dans lequel le boîtier comprend en outre un trou de pièce de fixation (92) dans le dessus du boîtier pour recevoir une pièce de fixation (150) destinée à venir en prise avec le corps d'attache enfilé à travers la tête métallique de verrouillage.

4. Serre-câble métallique à verrouillage d'une quelconque revendication précédente, dans lequel le niveau supérieur du boîtier a un fond de niveau supérieur (86) avec un évidement de verrouillage de corps d'attache (88),
facultativement dans lequel le boîtier a un trou fileté de pièce de fixation (92) dans le dessus du boîtier pour recevoir une pièce de fixation (150), moyennant quoi la pièce de fixation resserrée déforme le corps d'attache jusque dans l'évidement de verrouillage de corps d'attache,
en outre facultativement dans lequel le corps d'attache déformé augmente la rigidité du serre-câble métallique à verrouillage et améliore la résistance au glissement.

5. Serre-câble métallique à verrouillage d'une quelconque revendication précédente, dans lequel l'arrière du boîtier a une fente de passage (82) jusque dans le niveau supérieur pour recevoir le corps d'attache.

6. Serre-câble métallique à verrouillage d'une quelconque revendication précédente, dans lequel le niveau supérieur du boîtier a une paroi de retenue de tête (84) le long de l'arrière du boîtier pour maintenir la tête métallique de verrouillage dans le boîtier.

7. Serre-câble métallique à verrouillage d'une quelconque revendication précédente, dans lequel le niveau supérieur du boîtier a des nervures de retenue de tête (90) positionnées sur un fond (86) du niveau supérieur, les nervures de retenue de tête fournissent un ajustement avec serrage pour la tête métallique de verrouillage positionné dans le boîtier.

8. Ensemble de serre-câble métallique à verrouillage, comprenant :
le serre-câble métallique à verrouillage de quelconques des revendications 1 à 7 ; et
une pièce de fixation (150) installée à travers le dessus du boîtier multi-niveau ;
dans lequel le corps d'attache a une première extrémité (132) et une seconde extrémité (138), la première extrémité du corps d'attache étant enveloppée autour du niveau inférieur du boîtier multi-niveau.

9. Ensemble de serre-câble métallique à verrouillage de la revendication 8, dans lequel la pièce de fixation entre en prise avec la seconde extrémité du corps d'attache enfilée à travers la tête métallique de verrouillage,
facultativement dans lequel le niveau supérieur du boîtier a un fond de niveau supérieur (86) avec un évidement de verrouillage de corps d'attache (88), moyennant quoi le resserrage de la pièce de fixation déforme la seconde extrémité du corps d'attache jusque dans l'évidement de verrouillage de corps d'attache,
en outre facultativement dans lequel la seconde extrémité déformée du corps d'attache augmente la rigidité de l'ensemble de serre-câble métallique à verrouillage et améliore la résistance au glissement.
